# EUROPEAN PATENT SPECIFICATION

(11) **EP 1 652 745 B1**
(45) Date of publication and mention of the grant of the patent: **14.01.2009**
(21) Application number: 05023656.1
(22) Date of filing: 28.10.2005
(51) Int. Cl.: B60T 8/40, B60T 8/48

(54) **Vehicular brake fluid pressure controller**
Bremsflüssigkeits-Drucksteuergerät
Dispositif de commande de la pression de fluide de freinage

(30) Priority: 29.10.2004 JP 2004315630
(43) Date of publication of application: 03.05.2006
(73) Proprietor: NISSIN KOGYO CO., LTD., Ueda-shi, Nagano-ken (JP)
(72) Inventor: Nakamura, Motoyasu, 801 Kazawa Tomi-shi Nagano 389-0514 (JP)
(74) Representative: HOFFMANN EITLE

(56) References cited:
- EP-A- 1 176 075
- DE-A1- 3 048 847
- DE-A1- 10 316 351
- JP-A- 2002 264 787

## Description

### BACKGROUND OF THE INVENTION

### 1. Field of the Invention

The present invention relates to a vehicular brake fluid pressure controller, in which a separation valve communicates or blocks an output fluid pressure channel leading brake fluid from a master cylinder to a wheel brake side and a brake operation of the wheel brake by the brake fluid pressure is allowed on the wheel brake side in either state being communicated or blocked by the separation valve, the vehicular brake fluid pressure controller comprising: a simulator connected between the master cylinder of the output fluid pressure channel and the separation valve and comprising a dummy cylinder for imparting operating reaction force to a brake operator according to an operation of the brake operator; a detection unit for detecting the brake fluid pressure applied to the simulator; a cut valve disposed between the output fluid pressure channel and a wheel fluid pressure channel for leading the brake fluid to the wheel brake and for switching between two states where the brake fluid is either allowed or blocked to flow from the output fluid pressure channel to the wheel fluid pressure channel; a pump disposed between an intake fluid pressure channel for leading the brake fluid to the output fluid pressure channel and a discharge fluid pressure channel for leading the brake fluid to the wheel fluid pressure channel, the pump actuating in accordance with magnitude of the fluid pressure detected by the detection unit; and an intake valve for switching between two states where the intake fluid pressure channel is either opened or closed. Such a controller is known from JP-A-2002-264787. Such a controller may relate to a vehicular brake fluid pressure controller which can be mounted on a motorcycle, a three-wheeled vehicle or a buggy car (saddle-riding vehicle for traveling on a rough land).

### 2. Description of the Background Art

Conventionally there is a vehicular brake fluid pressure controller which electrically controls brake fluid pressure of a vehicle to allow the brake to actuate (for example, refer to Japanese Patent Unexamined Publication No. JP-A-2002-269787).

The vehicular brake fluid pressure controller disclosed in the JP-A-2002-264787 is provided with an electrical brake fluid pressure control mode and a mechanical brake fluid pressure control mode and structured in such a manner that components related to the electrical brake fluid pressure control mode are switched off to move to the mechanical brake-fluid pressure control mode, thereby providing a brake fluid pressure corresponding to an extent of the brake operation directly to a wheel cylinder to realize a fail-safe function, where the electrical brake-fluid pressure control mode is executed erroneously.

The above-described conventional vehicular brake fluid pressure controller is provided with a reservoir for reserving brake fluid, from which the brake fluid is supplied to the pump. However, since the reservoir used in the vehicular brake fluid pressure controller is opened to an ambient air, the reserved brake fluid tends to change in viscosity due to the influence of an ambient temperature and may result in some variation in a quantity of the brake fluid discharged from the pump.

In vehicular brake fluid pressure controllers which are structured so that brake fluid is pressurized by a pump, improvements in performance in controlling the pressure of the brake fluid has been demanded.

### SUMMARY OF THE INVENTION

The present invention relates to a vehicular brake fluid pressure controller as initially described and is characterised in that the vehicular brake fluid pressure controller further comprises: a reservoir disposed between the pump and the intake valve for temporarily reserving the brake fluid; and a brake fluid reserving chamber which is provided between the separation valve and the intake valve, and sealed hermetically, wherein the hermetic brake fluid reserving chamber allows the brake fluid to flow therein when the pump is halted, and allows the brake fluid to flow out therefrom when the pump is actuated.

At least one embodiment of the present invention provides a vehicular brake fluid pressure controller which is subject to less influence of an ambient temperature and can stably control brake fluid pressure, thereby improving the performance in controlling the pressure of the brake fluid.

According to an embodiment of the present invention, there is provided a vehicular brake fluid pressure controller, in which a separation valve communicates or blocks an output fluid pressure channel leading brake fluid from a master cylinder to a wheel brake side and a brake operation by the brake fluid pressure is allowed on the wheel brake side in either state being communicated or blocked by the separation valve, the vehicular brake fluid pressure controller comprising:
a simulator connected between the master cylinder of the output fluid pressure channel and the separation valve and comprising a dummy cylinder which imparts operating reaction force to a brake operator according to an operation of the brake operator;
a detection unit for detecting the brake fluid pressure applied to the simulator;
a cut valve disposed between the output fluid pressure channel and a wheel fluid pressure channel leading the brake fluid to the wheel brake and switching a state where the brake fluid is allowed or blocked to flow from the output fluid pressure channel to the wheel fluid pressure channel;
a pump disposed between an intake fluid pressure channel leading the brake fluid to the output fluid pressure channel and a discharge fluid pressure channel leading the brake fluid to the wheel fluid pressure channel, the pump actuating in accordance with magnitude of the fluid pressure detected by the detection unit;
an intake valve switching a state where the intake fluid pressure channel is opened or closed;
a reservoir disposed between the pump and the intake valve and temporarily reserving the brake fluid; and
a brake fluid reserving chamber which is provided between the separation valve and the intake valve, and is sealed hermetically,
   wherein the hermetic brake fluid reserving chamber allows the brake fluid to flow therein when the pump is halted, and allows the brake fluid to flow out therefrom when the pump is actuated.

The vehicular brake fluid pressure controller according to the embodiment of the present invention is provided with a hermetic brake fluid, reserving chamber which is designed so that brake fluid is allowed to flow in or flow out accordingly when the pump is halted or activated, thereby making it possible to reserve the brake fluid in a hermetic environment not exposed to an ambient air.

Therefore, unlike a conventional reservoir the vehicular brake-fluid-pressure controller is free from a cas where the brake fluid may change in viscosity due to the influence of an ambient temperature and can stably control the brake fluid pressure.

Further, since the brake fluid pressure controller can stably control the brake fluid pressure, the brake fluid can be smoothly supplied to an output fluid pressure channel leading the brake fluid to the wheel brake side at the time of controlling the pressure, thereby resulting in an effect of improving the performance at the time of controlling the pressure.

It is also desirable that the vehicular brake fluidpressure controller is provided with a simulator part including the separation valve, the simulator, the detection unit and the brake fluid reserving chamber and a modulator part including the cut valve, the pump, the intake valve and the reservoir, wherein the simulator part is structured separately from the modulator part.

Since the simulator part is structured separately from the modulator part, the structure can be made simpler than a case where they are structured in an integrated way. It is, therefore, possible to improve the productivity and assembly efficiency and also reduce the cost. Further, since the vehicular brake fluid pressure controller can be divided into two parts, namely, the simulator part and the modulator part, it can be structured so that either of these parts may be used together with another product, for example, which then leads to an improvement in productivity and reduction in cost due to common use of components. In addition, it may be structured in such a way that another existing product is used for fabricating either of the parts in whole or in part.

In addition, the brake fluid reserving chamber can be structured with a free piston of the capacity increases due to inflow of the brake fluid when the pump is halted and decreases due to outflow of the brake fluid when the pump is actuated.

The brake fluid reserving chamber structured with the free piston is able to reserve the brake fluid more favorably in a hermetic environment not exposed to an ambient air, thus making it possible to provide a vehicular brake fluid pressure controller which is less likely to change in viscosity of the brake fluid due to the influence of an ambient temperature and others. Further, the vehicular brake fluid pressure controller is free from possible contamination with air and others and also able to provide a smooth inflow and outflow of the brake fluid.

Embodiments of the present invention are less likely to be influenced by an ambient temperature and able to provide a more stable brake fluid pressure control, thereby making it possible to improve the performance when the brake fluid is pressurized and controlled.

### BRIEF DESCRIPTION OF THE DRAWINGS

For a better understanding of the present invention and to show how the same may be carried into effect, reference will now be made, by way of example to the accompanying drawings, in which:
FIG: 1 is a brake fluid pressure circuit diagram showing the vehicular brake fluid pressure controller according to an embodiment of the present invention;
FIG. 2 is a brake fluid pressure circuit diagram showing a state of the vehicular brake fluid pressure controller when an normally brake is applied;
FIG. 3 is a brake fluid pressure circuit diagram showing a state of the vehicular brake fluid pressure controller when an antilock brake is applied, and showing a case where the brake fluid pressure acting on the wheel brake is reduced;
FIG. 4 is also a drawing showing a case where the brake fluid pressure acting on the wheel brake is kept constant;
FIG. 5A is perspective view taken from the front face of a drawing showing a fluid pressure piping structure of the simulator part at the vehicular brake fluid pressure controller according to an embodiment of the present invention;
FIG. 5B is a perspective view taken from the back face of a drawing showing a fluid pressure piping structure of the simulator part at the vehicular brake fluid pressure controller according to an embodiment of the present invention;
FIG. 6A is also aplainviewof a drawing showing the simulator part;
FIG.6B a bottom view of a drawing showing the simulator part;
FIG. 7B is a perspective view taken from the front face of a drawing showing a fluid pressure piping structure of the modulator part at the vehicular brake fluid pressure controller according to an embodiment of the present invention;

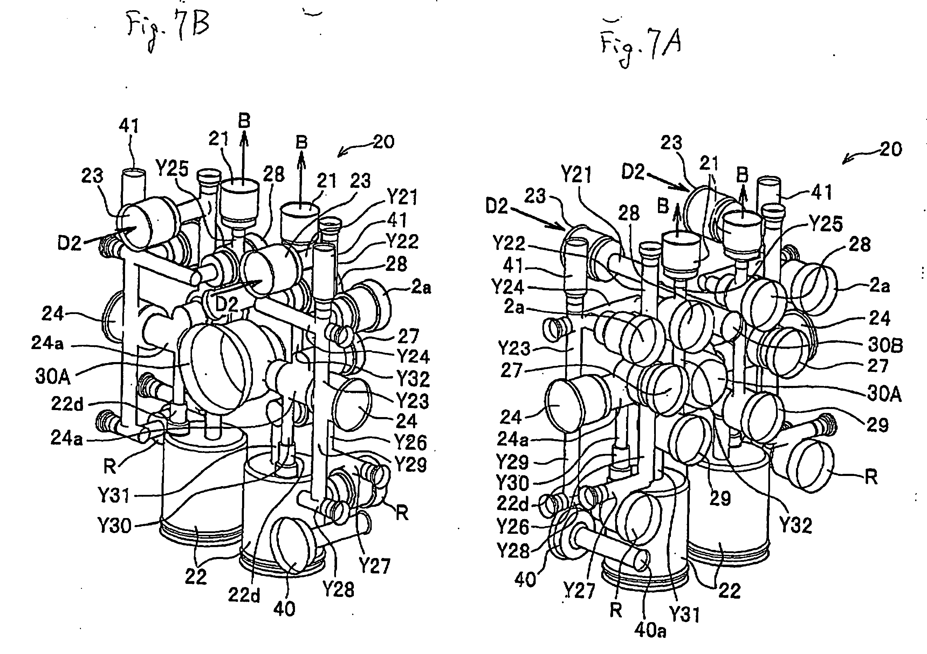

FIG. 7B is a perspective view taken from the back face of a drawing showing a fluid pressure piping structure of the modulator part at the vehicular brake fluidpressure controller according to an embodiment of the present invention;

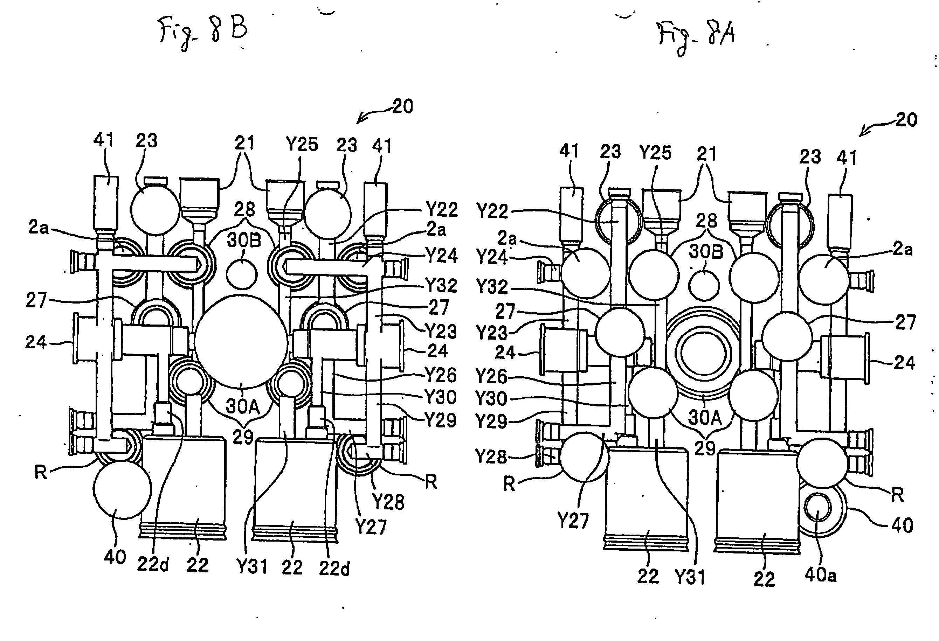

FIG. 8A is a plain view a drawing showing the modulator part;
FIG. 8B is a bottom view a drawing showing the modulator part;

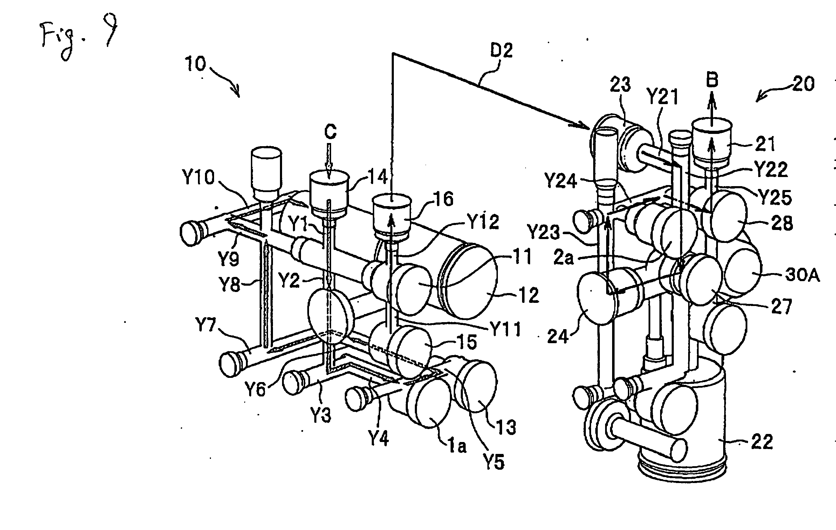

FIG. 9 is a drawing explaining a flow of the brake fluid when an normally brake is applied;

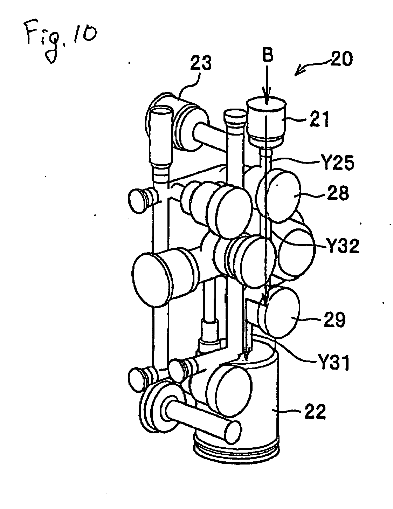

FIG. 10 is drawing explaining a flow of the brake fluid when an antilock brake is applied; and

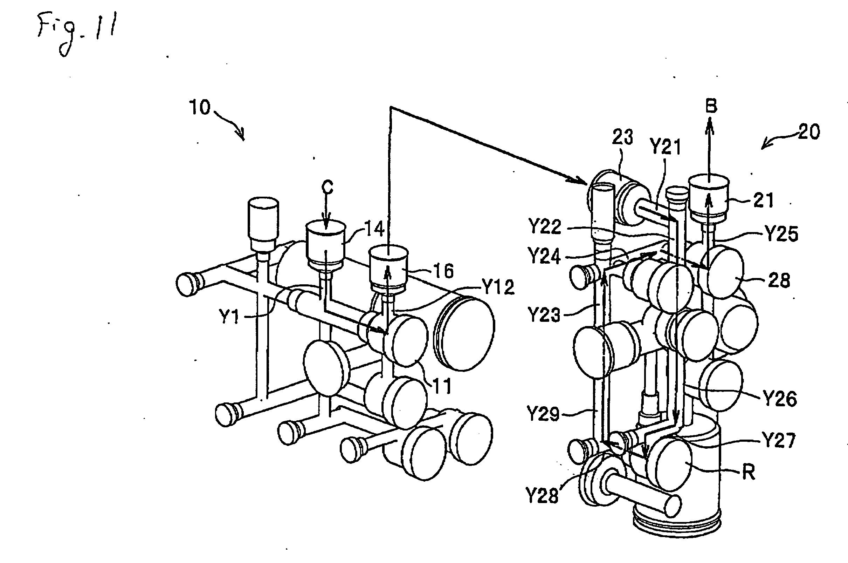

FIG. 11 is a drawing explaining a flow of the brake fluid when an engine is not driven.

### DETAILED DESCRIPTION OF THE PREFERRED EMBODIMENT

Hereinafter, a description is given in detail of an embodiment of the present invention with reference to the drawings. In this description, the same symbols are used for the same elements to omit overlapping description.

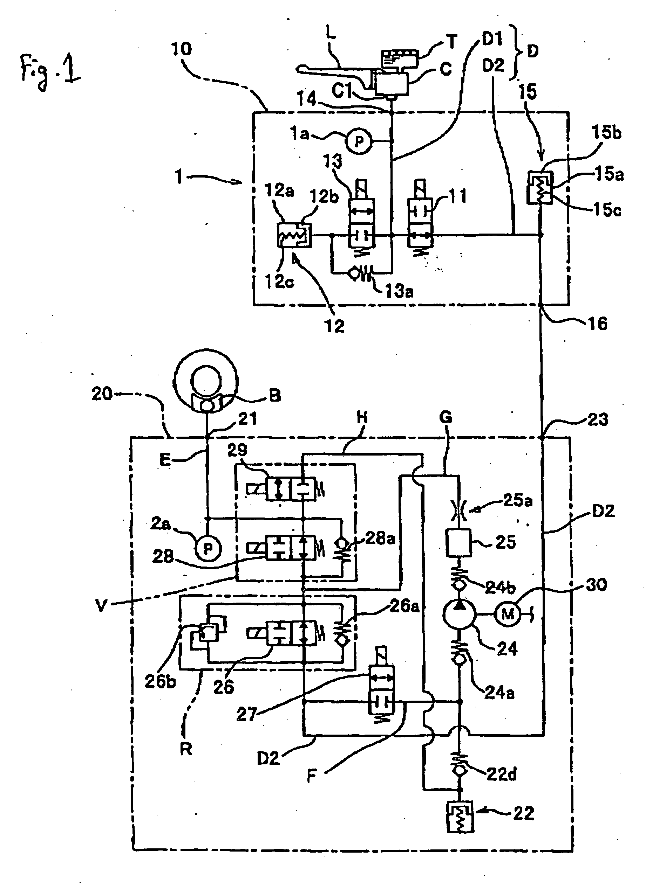

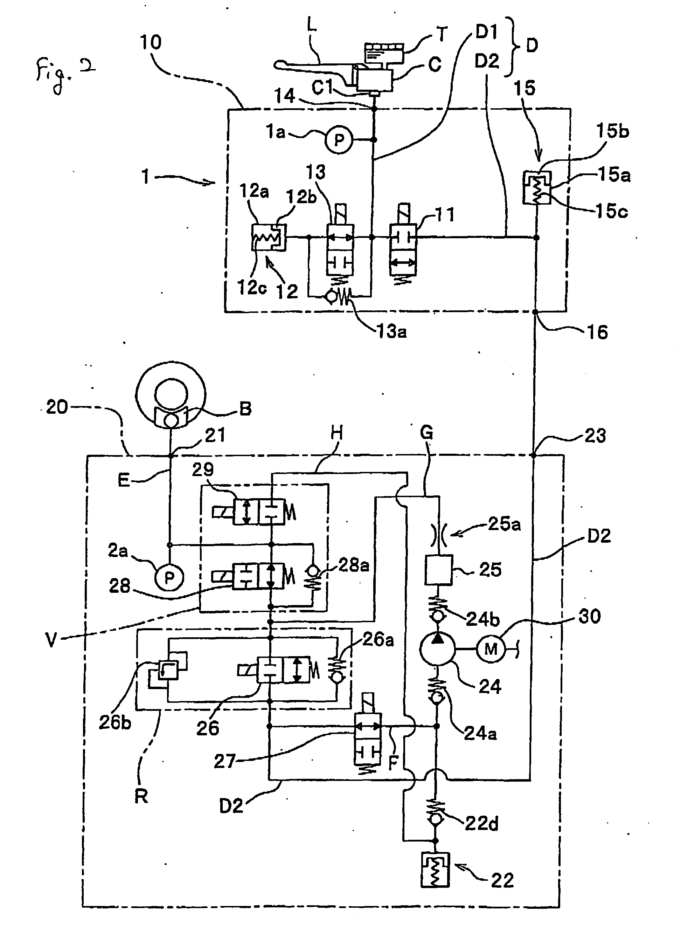

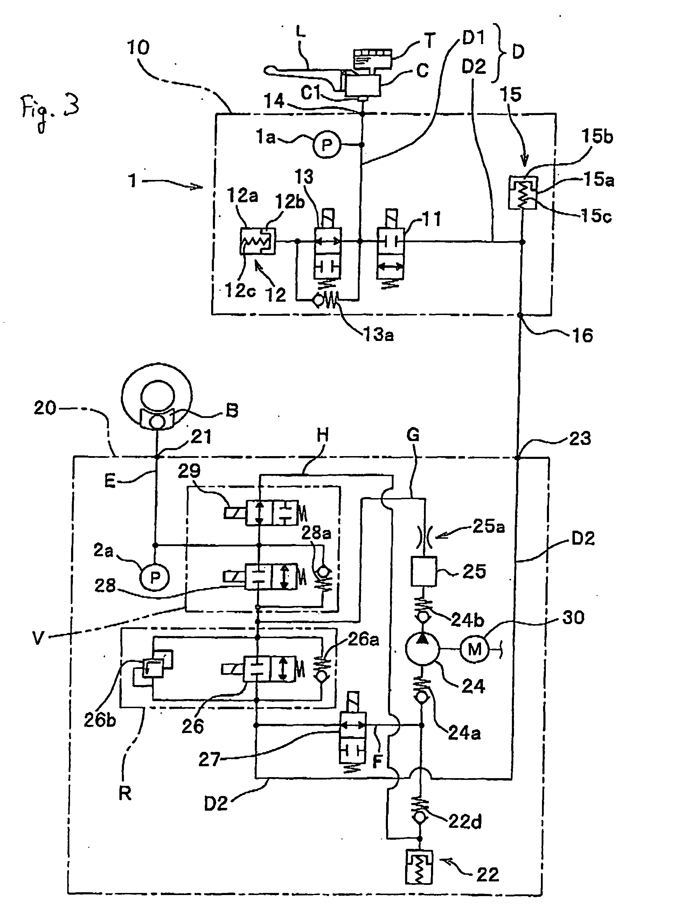

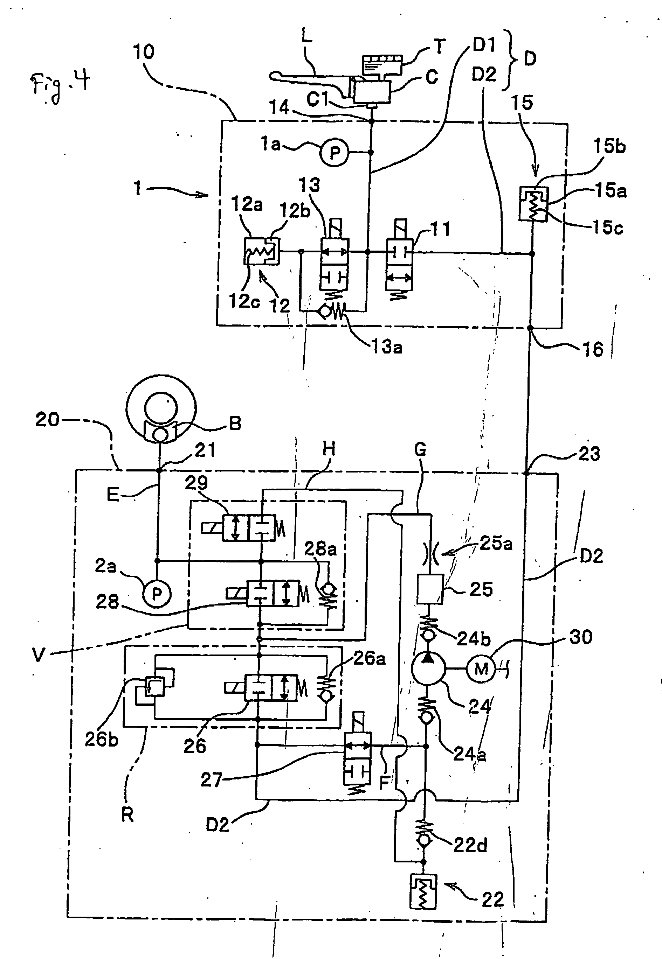

Regarding the drawings to be referred to, FIG. 1 is a circuit diagram of brake fluid pressure showing the vehicular brake fluid pressure controller of one embodiment of the present invention. FIG. 2 is a circuit diagram of brake fluid pressure showing a state of the vehicularbrake fluid pressure controller at the time when a normally brake is applied. FIG. 3 is a circuit diagram of brake fluid pressure showing a state of the vehicular brake fluid pressure controller when controlled by an antilock brake which shows a case where the brake fluid pressure acting on the wheel brake is reduced. FIG. 4 is also a drawing showing a case where the brake fluid pressure acting on the wheel brake is kept constant. Hereinafter, a description is given for an example where the vehicular brake fluid pressure controller is used in a motorcycle. Further, a vehicular brake fluid pressure controller is usually constituted by two brake systems, namely, a front wheel brake and rear wheel brake. Since each system is identically constituted, a description is givenmainly for the system related to the front wheel brake and made for the system related to the rear wheel brake, whenever necessary.

As shown in FIG. 1, the vehicular brake fluid pressure controller 11 is disposed between a master cylinder C which produces a brake fluid pressure according to an operating force applied to a brake operator L by a driver and a wheel brake B, and provided with a simulator part 10 connected to the master cylinder C and a modulator part 20 connected to the wheel brake B. A separation valve 11 described below is installed on an output fluid pressure channel D leading from the simulation part 10 to the modulator part 20, and constituted in such a way that braking of the wheel brake B can be applied by the brake fluid pressure on the wheel brake B side, irrespective of being communicated with or is blocked by the separation valve 11. In other words, the vehicular brake fluid pressure controller 1 disclosed in the present embodiment is constituted in such a way that the output fluid pressure channel D is ordinarily blocked by the separation valve 11 and the wheel brake B is driven by the brake fluid pressure applied by actuation of a pump 24 (source of fluid pressure). To be more specific, it is constituted so that the brake fluid pressure according to an operating force of the brake operator L is detected at the simulator part 10 and the brake is controlled according to measured values of the force by controlling the actuation of the pump 24 at the modulator part 20. Hereinafter, the output fluid pressure channel D covering the upstream from the separation valve 11 (at the master cylinder C) will be described as output fluid pressure channel D1, and that covering the downstream from the separation valve 11 (at the wheel brake B) will be described as output fluid pressure channel D2, whenever necessary.

An output port C1 of the master cylinder C is connected to an inlet port 14 of the simulator part 10, and an outlet port 21 of the modulator part 20 is connected to the wheel brake B. Then, an fluid channel is constituted, which enters into the modulator part 20 from an inlet port 14 of the simulator part 10 through the output fluid pressure channel D1 and the output fluid pressure channel D2 and communicated to an outlet port 21 of the wheel brake B. Further, for example, where the engine is not driven, the brake fluid pressure according to an operating force of the brake operator L is directly transmitted to the wheel brake B, described below.

The master cylinder C is provided with a cylinder (not illustrated) to which a brake fluid tank T that stores brake fluid is connected, and a rod piston (not illustrated) is assembled inside the cylinder, whichslides in an axial direction of the cylinder by operation of the brake operator L to supply the brake fluid to the output fluid pressure channel D1 from the output port C1.

The simulator part 10 is connected to the output fluid pressure channel D leading to the modulator part 20, and provided with a separation valve 11 which switches from a state where the output fluid pressure channel D is communicated to a state where it is blocked or vice versa, a pressure detection sensor 1a connected to the output fluid pressure channel D1 located between the inlet port 14 and the separation valve 11, and the simulator 12. The separation valve 11 is a normally-open type electromagnetic valve and constituted so as to block the output fluid pressure channel D at normally times in a state where the engine (not illustrated) is driven. Further, it is constituted so as to communicatively connect the output fluid pressure channel D in a state where the engine (not illustrated) described below is not driven.

The pressure detection sensor 1a is a fluid pressure detection sensor for detecting the brake fluid pressure on the output fluid pressure channel D1 blocked by the separation valve 11.

The simulator 12 is provided with a dummy cylinder 12a, a piston 12b disposed inside the dummy cylinder 12a in a freely slidable way and a coil spring 12c which energizes the piston 12b and connected to the output fluid pressure channel D1 via an on-off valve 13. This simulator 12 is constituted in such a way that a brake operator L is operated to allow inflow of the brake fluid which flows out to the output fluid pressure channel D1 by moving the piston 12b without a load, thereby imparting to the brake operator L an operating reaction force according to the operation of the brake operator L, when the separation valve 11 is blocked and the on-off valve 13 communicates. In other words, the fluid pressure at a fluid chamber of the dummy cylinder 12a of the simulator 12 increases with an increase in pressure of the master cylinder C, when an operating force is given to the brake operator L. In this instance, the piston 12b is displaced at a position where an elastic force given from the coil spring 12c is in equilibrium with a fluid pressure inside the fluid chamber in an expanding direction of the fluid chamber, and brake fluid is fed into the fluid chamber from the output fluid pressure channel D1 in a quantity corresponding to an expansion of the fluid chamber, thereby producing an operational stroke according to the thus fed quantity at the brake operator L. Therefore, the brake operator L is secured for an operational sense and the brake fluid pressure is detected by the pressure detection sensor 1a, with this state kept.

The on-off valve 13 is a normally-close type electromagnetic valve and constituted so as to communicate between the output fluid pressure channel D1 and the simulator 12 when the engine (not illustrated) is driven at normally times. It is also constituted so as to block between the output fluid pressure channel D1 and the simulator 12 when the engine (not illustrated) described below is not driven. A check valve 13a is connected in parallel with the on-off valve 13. The check valve 13a is a valvewhich allows brake fluid to flow in only from the simulator 12 to the output fluid pressure channel D1 and also allows the brake fluid to flow in from the simulator 12 to the output fluid pressure channel D1 even in a state where the on-off valve 13 is closed, when input from the brake operator L is released.

A free piston 15 is connected as a brake fluid reserving chamber to the output fluid pressure channel D2 on the downstream of the separation valve 11 at the simulator part 10. The free piston 15 mainly functions to reserve the brake fluid supplied to the pump 24 described below at the modulator part 20; and the brake fluid reserved at the free piston 15 is supplied to the modulator part 20 through the output fluid pressure channel D2, when the pump 24 is actuated. The free piston 15 reserves the brake fluid returned through the output fluid pressure channel D2, when the pump 24 is halted.

The free piston 15 is provided with a cylindrical housing 15a, the both ends of which are closed, a piston 15b which is freely slidably disposed inside the housing 15a and forms a chamber for reserving the brake fluid and a coil spring 15c energizing the piston 15b. Then, the brake fluid suctioned by the pump 24 can be reserved in the brake fluid reserving chamber formed by the piston 15b. FIG. 1 graphically shows a state where the brake fluid is reserved in the free piston 15. It is desirable that the free piston 15 is provided with a chamber which can reserve the brake fluid returned through the output fluid pressure channel D2 when the pump 24 is halted, and may be available in any given form, constitution and others . The above-described free piston 15 is connected to the output fluid pressure channel D2, thereby making it possible to increase a volume of the brake fluid fed into the pump 24 through the output fluid pressure channel D2. Further, the brake fluid returned through the output fluid pressure channel D2 when the pump 24 is halted is smoothly supplied into the brake fluid reserving chamber inside the housing 15a formed by the piston 15b due to elastic force given by the coil spring 15c.

The modulator part 20 is provided with a reservoir 22, a pump 24, a damper 25, an orifice 25a, a regulator R, an intake valve 27 and a pressure detection sensor 2a, and also provided with a common electrical motor 30 for driving the respective pumps 24 for the front wheel brake B and the rear wheel brake B (not illustrated).

Hereinafter, an fluid channel leading to the regulator R through the separation valve 11 of the simulator part 10 is called an output fluid pressure channel D2 and that leading from the regulator R to the wheel brake B is called a wheel fluid pressure channel E. Further, an fluid channel leading from the output fluid pressure channel D2 to the pump 24 is called an intake fluid pressure channel F, and that leading from the pump 24 to the wheel fluid pressure channel E is called a discharge fluid pressure channel G, and that leading from the wheel fluid pressure channel E to the reservoir 22 is called an open channel H.

As described above, the modulator part 20 is, in normally times, structured so that the output fluid pressure channel D is blocked by the separation valve 11 to separate a fluid channel from the simulator part 10 and the wheel brake B is driven by the brake fluid pressure given by actuation of the pump 24. Therefore, the wheel fluid pressure channel E is connected to a pressure detection sensor 2a for measuring the brake fluid pressure and also provided with control valve unit V for controlling the brake fluid pressure applied to the wheel brake B so that brake control based on the measured value of the brake fluid pressure is detected by the pressure detection sensor 1a of the simulator part 10. Then, the pump 24 at the modulator part 20 is controlled for actuation by control unit (not illustrated), for example, in such a way that measured values of the pressure detection sensor 2a are the same as those of the pressure detection sensor 1a at the simulator part 10. Further, operational control of the pump 24 can be variously set so that an optimal braking can appropriately be carried out according to the traveling conditions, etc., in view of possible slip of wheels, measured values detected by the pressure detection sensor 2a can be set higher than those of the pressure detection sensor 1a at the simulator part 10, or the other way round, the values can be set lower. Further, the measured results of the pressure detection sensor 2a are taken as needed by a controller (not illustrated) and judged by the controller for whether or not the brake fluid pressure is output (outflow of the brake fluid) from the pump 24, namely, whether the brake operator L is operated or not. The antilock brake and the traction are controlled on the basis of a magnitude of the brake fluid pressure measured by the pressure detection sensor 2a.

The control valve unit V is provided with a function for switching a state where the open channel H is blocked, with the wheel fluid pressure channel E being opened, a state where the open channel H is opened, with the wheel fluid pressure channel E being blocked, and a state where the open channel H is blocked, with the wheel fluid pressure channel E being blocked, and constituted by an inlet valve 28, an outlet valve 29 and a check valve 28a.

The inlet valve 28 is a normally-open type electromagnetic valve mounted on the wheel fluid pressure channel E. Since the inlet valve 28 is opened at normally times, it allows the brake fluid pressure to transmit from the pump 24 to the wheel brake B. Further, the inlet valve 28 is blocked by a controller (not illustrated) when a wheel is about to be locked, thereby blocking the brake fluid pressure transmitted from the pump 24 to the wheel brake B.

The outlet valve 29 is a normally-close type electromagnetic valve installed between the wheel fluid pressure channel E and the open channel H. The outlet valve 29 is closed at normally times, however, it is operated by a controller (not illustrated), thereby relieving the brake fluid pressure acting on the wheel brake B to the reservoir 22 when a wheel is about to be locked.

The check valve 28a is connected in parallel with the inlet valve 28. The check valve 28a is a valve which allows the brake fluid to flow in only from the wheel brake B to the regulator R, and also allows the brake fluid to flow in from the wheel brake B to the regulator R even in a state where the inlet valve 28 is closed, when input from the brake operator L is cancelled.

The reservoir 22 is provided on the open channel H, having a function for absorbing the brake fluidpressure which is opened by opening the outlet valve 29. A check valve 22d is also installed between the reservoir 22 and the intake fluidpressure channel F, allowing the brake fluid to flow in only from the reservoir 22 to the pump 24. Further, a pump intake valve 24a is also installed between the reservoir 22 and the pump 24, allowing the brake fluid to flow in only from the reservoir 22 to the pump 24. In addition, a pump discharge valve 24b is installed between the pump 24 and the damper 25, allowing the brake fluid to flow out only from the pump 24 to the damper 25.

The pump 24 is installed between the intake fluid pressure channel F leading to the output fluid pressure channel D2 and the discharge fluid pressure channel G leading to the wheel fluid pressure channel E. As described above, it is provided with a function for absorbing the brake fluid reserved at the free piston 15 and the reservoir 22 fixed at the simulator part 10 through the output fluid pressure channel D2, thereby discharging the brake fluid to a discharged fluid pressure channel G. The above-described pump 24 is actuated to transmit the brake fluid pressure to the wheel fluid pressure channel E. Further, the output fluid pressure channel D2 and wheel fluid pressure channel E are recovered from a state of pressure reduction due to absorption of the brake fluid by the reservoir 22 at the time of controlling an antilock brake described below. After completion of the brake operation by the brake operator L, a cut valve 26 described below allows the brake fluid to flow in from the wheel fluid pressure channel E to the output fluid pressure channel D2, by which the brake fluid which flows into the wheel fluid pressure channel E is returned to the free piston 15 through the output fluid pressure channel D2.

Further, the damper 25 and the orifice 25a will attenuate the pulsation of the pressure of the brake fluid discharged from the pump 24 and the pulsation produced by actuation of the regulator R described below through cooperative action.

The regulator R is provided with a function for switching from a state where the brake fluid is allowed to flow in from the output fluid pressure channel D2 to the wheel fluid pressure channel E to a state where it is blocked or vice versa, and a function for adjusting the brake fluid pressure to the wheel fluid pressure channel E and the discharge fluid pressure channel G to a value lower than a predetermined value when the brake fluid is blocked for flowing in the wheel fluid pressure channel E from the output fluid pressure channel D2. Further, the regulator is provided with a cut valve 26, a check valve 26a and a relief valve 26b.

The cut valve 26 is a normally-open type electromagnetic valve installed between the output fluid pressure channel D2 leading to the master cylinder C and the wheel fluid pressure channel E leading to the wheel brake B, switching from a state where the brake fluid is allowed to flow in from the output fluid pressure channel D2 to the wheel fluid pressure channel E to a state where it is blocked or vice versa. The cut valve 26 is structured to be controlled by a controller (not illustrated) so as to block the brake fluid (closing of the valve) when the pump 24 is actuated, and so that the brake fluid which flows out from the free piston 15 due to actuation of the pump 24 can be blocked from directly being transmitted to the wheel fluid pressure channel E from the output fluid pressure channel D2. Therefore, the brake fluid is absorbed by the pump 24 from the output fluid pressure channel D2 through the intake fluid pressure channel F (intake valve 27). Further, the cut valve 26 is demagnetized in association with halt of the pump 24 and communicated (opening of the valve), by which the brake fluid is returned to the output fluidpressure channel D2 through the cut valve 26 from the wheel fluid pressure channel E and then returned to the free piston 15 without fail.

The check valve 26a is connected in parallel with the cut valve 26. The check valve 26a is a valve which allows the brake fluid to flow in only from the output fluid pressure channel D2 to the wheel fluid pressure channel E. Therefore, the check valve 26a allows the brake fluid to flow in from the output fluid pressure channel D2 to the wheel fluid pressure channel E, even if locked due to malfunctions and others, with the cut valve 26 being closed.

The relief valve 26b is connected in parallel with the cut valve 26, and opens in accordance with the brake fluid pressure on the wheel fluid pressure channel E and the discharge fluid pressure channel G exceeding a predetermined value.

The intake valve 27 is a normally-close type electromagnetic valve installed on the intake fluid pressure channel F, and switches from a state where the intake fluid pressure channel F is opened to a state where it is blocked or vice versa. The intake valve 27 is opened (opening of the valve) by a controller (not illustrated) in accordance with actuation of the pump 24 and blocked (closing of the valve) in association with halt of the pump 24.

Next, a description is given in detail of the motion of the vehicular brake fluid pressure controller 1 with reference to FIG. 1 through FIG. 4. In FIG. 2 through FIG. 4, only a brake system of the front wheel is illustrated for convenience and the same shall apply to a brake system of the rear wheel.

As shown in FIG. 2, actuation of an engine (not illustrated) will open the separation valve 11 at the simulator part 10 by a controller (not illustrated) to be put into a state where the output fluid-pressure channel D1 and the output fluid pressure channel D2 are blocked. Further, the on-off valve 13 is opened between the output fluid-pressure channel D1 and the simulator 12 to be put into a state where they are communicated. To be more specific, a fluid channel (output fluid pressure channel D) between the simulator part 10 and the modulator part 20 is put into a state where it is blocked and separated by the separation valve 11 and also a state where the brake operator L operates the brake fluid pressure to actuate the simulator 12 by operation of the brake operator L. In contrast, at the modulator part 20, it is put into a state where the output fluid pressure channel D2 is blocked, thereby bringing about a state where no brake fluid pressure is applied directly to the wheel brake B from the master cylinder C. Therefore, the brake fluid pressure resulting from the operating force of the brake operator L is applied as it is to the simulator 12 and the pressure detection sensor 1a is used to measure the brake fluid pressure.

### (At normally times)

If the brake operator L is operated at the time of applying an normally brake (at normally times) when there is no possible lock of wheels, such operation is measured by a pressure detection sensor 1a, and an electrical motor 30 at the modulator part 20 is driven by a controller (not illustrated) to actuate the pump 24. The cut valve 26 is closed by a controller (not illustrated) accordingly and the intake valve 27 is also opened. In association with actuation of the pump 24, the pump 24 is kept negative in pressure at the absorption part, and the brake fluid reserved at the free piston 15 (at the free piston 15 and the reservoir 22 where the brake fluid exists in the reservoir 22 as well) is absorbed by the pump 24 so as to be suctioned out from the free piston 15. The brake fluid suctioned by the pump 24 flows to the wheel fluid pressure channel E through the discharge fluid pressure channel G from the inlet valve 28 which is opened, thereby acting on the wheel brake B. In this instance, the pressure detection sensor 2a is used to measure the brake fluid pressure on the wheel fluid pressure channel E, thereby the measured values are loaded in a controller (not illustrated) whenever necessary. Then the controller judges whether or not the brake fluid pressure on the wheel brake B reaches a predetermined fluid pressure (for example, fluid pressure equal to that detected by the pressure detection sensor 1a). The pump 24 is controlled for actuation until a predetermined fluid pressure is obtained.

Thereafter, where it is judged by the controller (not illustrated) that the brake fluid pressure on the wheel brake B has reached a predetermined fluid pressure, the pump 24 is halted. Then, the brake operator L is returned to cut off the brake. At that time, the cut valve 26 is opened and the intake valve 27 is closed. Therefore, the wheel fluidpressure channel E and the output fluid pressure channel D2 are put into a communicated state, and the brake fluid is returned to the output fluid pressure channel D2 from the wheel fluid pressure channel E through the cut valve 26. Then, the brake fluid which has been returned to the output fluid pressure channel D2 is again reserved in the free piston 15. It is stored as the brake fluid to be supplied to the pump 24, when the pump 24 is actuated subsequently.

### (Control of antilock brake)

When a wheel is about to be locked in the midst of operating the brake operator L, anti-lock brake controls is started by a controller (not illustrated). In this instance, the antilock brake control is to control the control valve unit V corresponding to a wheel brake of the wheel which is about to be locked, thereby reducing, increasing and keeping constant the brake fluid pressure acting on the wheel brake B. Further, at the time of controlling an antilock brake, as shown in FIG. 3, the cut valve 26 is in a state of blocking the brake fluid from the output fluid pressure channel D2 to the wheel fluid pressure channel E, and the intake valve 27 is in a state of communicating with the intake fluid pressure channel F.

Where the brake fluid pressure acting on the wheel brake B is reduced, as shown in FIG. 3, the wheel fluid pressure channel E is blocked by the control valve unit V to open the open channel H. To be more specific, the inlet valve 28 is excited by a controller (not illustrated) tobeclosed (closingof the valve), and the outlet valve 29 by a controller (not illustrated) to be opened (opening of the valve). Therefore, the brake fluid of the wheel fluid pressure channel E leading to the wheel brake B enters into the reservoir 22 through the open channel H, resulting in a reduction in brake fluid pressure which has acted on the wheel brake B.

Where the brake fluid pressure acting on the wheel brake B is kept constant, as shown in FIG. 4, the control valve unit V operates to block the wheel fluid pressure channel E and the open channel H, respectively. To be more specific, the inlet valve 28 is excited by the controller (not illustrated) to be closed (closing of the valve), and also the outlet valve 29 is demagnetized by the controller (not illustrated) to be closed (closing of the valve). Therefore, the brake fluid is confined into the fluid channel blocked by the wheel brake B, the inlet valve 28 and the outlet valve 29, by which the brake fluid pressure acting on the wheel brake B is kept constant as a result.

Where the brake fluid pressure acting on the wheel brake B is increased, the control valve unit V releases the wheel fluid pressure channel E to block the open channel H. To be more specific, the inlet valve 28 is demagnetized by a controller (not illustrated) to be opened (opening of the valve), and also the outlet valve 29 is demagnetized by a controller (not illustrated) to be closed (closing of the valve) (refer to FIG. 1). Therefore, by operation of the pump 24, the brake fluid which has flown out on the discharge fluid pressure channel G acts on the wheel fluid pressure channel E through the inlet valve 28, resulting in an increase in brake fluid pressure which acts on the wheel brake B.

### (At the time when an engine is not driven and others)

When an engine (not illustrated) is not driven, all electromagnetic valves including the separation valve 11 are demagnetized. This fact is described with reference to FIG. 1. The on-off valve 13 is in a state of blocking the output fluid pressure channel D1 and the simulator 12, the separation valve 11 is in a state of communicating with the output fluid pressure channel D, the regulator R is in a state where the brake fluid is allowed to flow in from the output fluid pressure channel D2 to the wheel fluid pressure channel E, the intake valve 27 is in a state where the intake fluid pressure channel F is blocked, and the control valve unit V is in a state where the wheel fluid pressure channel E is opened with the open channel H being blocked. To be more specific, the separation valve 11, the cut valve 26 of the regulator R and the inlet valve 28 of the control valve unit V are in an open state (opening of the valve), and the on-off valve 13, the intake valve 27 and the outlet valve 29 of the control valve unit V are in a closed state (closing of the valve). Therefore, the brake fluid pressure produced from an operating force of the brake operator L is applied as it is to the wheel brake B, thereby making it possible to control the wheel brake B by an operating force of the brake operator L.

### (Brake control at the time when a brake operator is not operated)

When the brake operator L is not operated, traction control is started by a controller (not illustrated), according to the condition of a vehicle.

When a wheel is braked with the brake operator L not being operated, as shown in FIG. 2, the regulator R operates to block inflow of the brake fluid from the output fluid pressure channel D to the wheel fluid pressure channel E and also the intake valve 27 operates to release the intake fluid pressure channel F. Further, the control valve unit V operates to open the wheel fluid pressure channel E leading to the wheel brake B and the pump 24 is actuated, in this state. To be more specific, the cut valve 26 is excited by a controller (not illustrated) to be closed (closing of the valve), and also the intake valve 27 is excited by a controller (not illustrated) to be opened (opening of the valve). Further, the control valve unit V operates to demagnetize the inlet valve 28 to be opened (opening of the valve) and to drive the electrical motor 30 in an attempt to actuate the pump 24, in this state. Therefore, the brake fluid mainly reserved at the free piston 15 is absorbed by the pump 24 through the output fluid pressure channel D2, and then is discharged into the discharge fluid pressure channel G from the pump 24. Further, the cut valve 26 is kept closed and the inlet valve 28 leading to the wheel brake B is kept open. Therefore, the brake fluid supplied to the discharge fluid pressure channel G flows into the wheel fluid pressure channel E leading to the wheel brake B, by which the brake fluid pressure consequently acts on the wheel brake B, the brake is applied to the wheels.

At this moment, the brake fluid reserved at the free piston 15 is absorbed by the pump 24 through the output fluid pressure channel D2 due to actuation of the pump 24. Therefore, the brake fluid can stably be supplied to the wheel fluid pressure channel E, even at the time of starting the pump 24.

Where the brake operator L is not used and the brake fluid pressure on the wheel fluid pressure channel E and the discharge fluid pressure channel G exceeds a predetermined value due to brake control and others, the relief value 26b acts to release the brake fluid from the wheel fluid pressure channel E and the discharge fluid pressure channel G to the output fluid pressure channel D2, thereby avoiding an excessive brake fluid pressure which otherwise would act on the wheel brake B.

Further, pulsation produced at the discharge fluidpressure channel G and others due to actuation of the regulator R is absorbed and controlled through cooperative actions of the damper 25 and the orifice 25a, thereby reducing an actuation noise related to the pulsation.

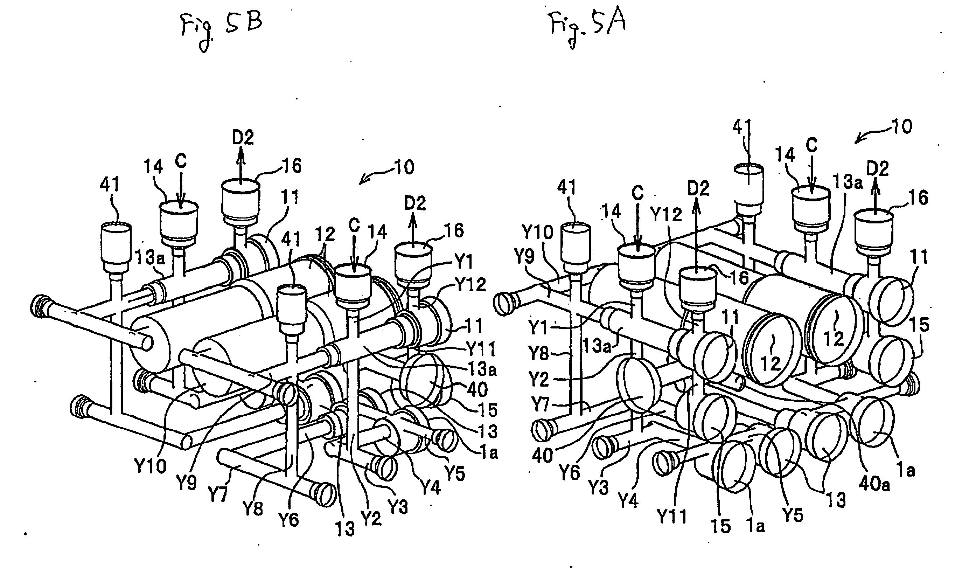

Next, a description is given in detail of a fluid pressure piping structure of the vehicular brake fluid pressure controller 1 with reference to FIG. 5 through FIG. 8. Further, the following description is given for the vehicular brake fluid pressure controller 1 in which the simulator part 10 and the modulator part 20 are constituted by different members (separated), each of which will be described, with the side to which a electromagnetic valve is inserted being taken as a front face.

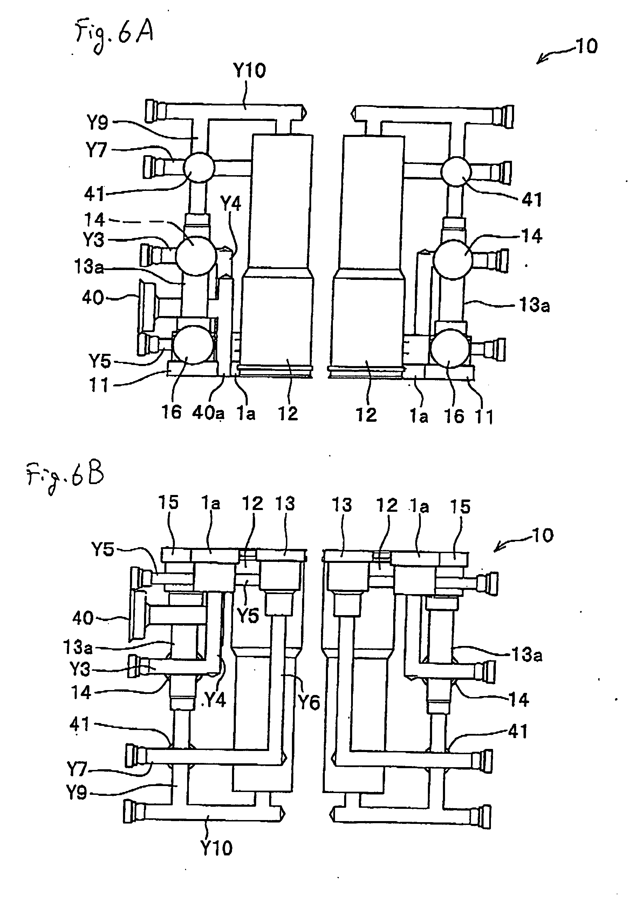

With reference to the drawings, FIG. 5 is a drawing showing a fluid pressure piping structure of the simulator part at the vehicular brake fluid pressure controller of an embodiment of the present invention, FIG.5A is a perspective view taken from the front side, and FIG. 5B is a perspective view taken from the back side. FIG. 6 is also a drawing showing the simulator part, FIG.6A is a plain view and FIG. 6B is a bottom view. FIG. 7 is a drawing showing a fluid pressure piping structure of the modulator part at the vehicular brake fluid pressure controller of an embodiment of the present invention, FIG.7A is a perspective view taken from the front face and FIG. 7B is a perspective view taken from the back face. FIG. 8 is also a drawing showing the modulator part, and FIG. 8A is a plain view and FIG.8B is a bottom view.

The simulator part 10 and the modulator part 20 in the vehicular brake fluid pressure controller 1, both of which are not illustrated, are approximately in a rectangular shape. As shown in FIG. 5A and 5B as well as FIG. 7A and 7B, two brake systems consisting of the front wheel brake and the rear wheel brake are disposed approximately in symmetry. As described above, since these systems are constituted similarly, a description is given mainly for the system related to the front wheel brake and also given for that related to the rear wheel brake, whenever necessary. Further, in these figures, symbols of respective components are given to holes for fitting the components such as electromagnetic valves.

As shown in FIGS. 5A and 5B, a simulator part 10 is provided on the front face with holes for fitting a separation valve 11, a simulator 12, an on-off valve 13, a free piston 15 and a pressure detection sensor 1a, on the upper face with an inlet port 14 and an outlet port 16, and on both right and left faces fluid channel-forming holes for forming transverse fluid channels (refer to FIGS. 6A and 6B). To be more specific, the simulator part 10 (not illustrated) is provided with fluid channels formed by machining the body on four sides, or front face, upper face and both right and left faces. Therefore, installation work of devices (not illustrated) such as electromagnetic valves is carried out only on the front face of the body. Further, oil-pressure piping from the master cylinder C (refer to FIG. 1) and connection of the output fluid pressure channel D2 to the modulator part 20 are to be made only on the upper face of the body (not illustrated). No fluid channels are formed on the back and lower faces of the body (not illustrated).

A control housing (not illustrated) which houses various electronic control units (controllers) for controlling opening and closing of electromagnetic valves is installed via seal members and others on the front face of the simulator part 10. An opening 40a of an air hole 40 is perforated for communicating with the left face inside the control housing. Further, the opening of the air hole 40 is covered with a moisture-permeable and moisture-proof material. In this instance, the moisture-permeable and moisture-proof material is a material which can prevent permeation of water from outside but allow only air to permeate in and out, for example, Gore-Tex (registered trade mark) may be used.

An inlet port 14 to which the piping from the master cylinder C (refer to FIG. 1) is connected is formed in a cylindrical shape with a bottom and communicated with a fitting hole of a check valve 13a via a vertical fluid channel Y1 starting from the bottom, and also communicated with a closed-bottom cylindrical fitting hole to which the pressure detection sensor 1a is attached via a transverse fluid channel Y3 and a depth fluid channel Y4 from a vertical fluid channel Y2 starting from the bottom of the fitting hole of the check valve 13a, after bypass via the check valve 13a. Then, it is communicated with a closed-bottom cylindrical fitting of the on-off valve 13 via the transverse fluid channel Y5 from a fitting hole of the pressure detection sensor 1a, and also communicated with a closed-bottom-cylindrical hole of the simulator 12 via the depth fluid channel Y9 and the transverse fluid channel Y10 extended from a fitting hole of the on-off valve 13, the depth fluid channel Y6, the transverse fluid channel Y7, the vertical fluid channel Y8 and a fitting hole of the check valve 13a.

A closed bottom cylindrical fitting hole of the free piston 15 is communicated with a closed bottom cylindrical fitting hole of the separation valve 11 via the vertical fluid channel Y11 starting from the upper face thereof, and a hole for fitting a separation valve 11 is communicated with the closed bottom cylindrical outlet port 16 via the vertical fluid channel Y12 starting from the upper face thereof. In this instance, the fitting hole of the separation valve 11 is communicated with a fitting hole of the check valve 13a and the depth fluid channel Y9. Further, a communication channel (space and others) (not illustrated) for communicating the vertical fluid channel Y11 with the vertical fluid channel Y12 not influenced by opening-and-closing operation of the separation valve 11 is formed inside the fitting hole of the separation valve 11. Therefore, a space between the free piston 15 and the outlet port 16 is kept communicated, regardless of whether the separation valve 11 is opened or not, thereby making it possible to flow brake fluid through the space. To be more specific, while the engine is halted, the brake fluid is supplied to the modulator part 20 through the outlet port 16 from the free piston 15.

Further, the vertical fluid channel Y8 is formed by the intersection of the depth fluid channel Y9 and provided with a breeder 41 at the edge thereof. The breeder 41 releases air that is entered into a fluid channel in sealing the brake fluid. Magnet coils (not illustrated) for driving magnet valves are wound around respective electromagnetic valves. Further, openings of the transverse fluid channels Y3, Y5, Y7 and Y10 are sealed with a stopper (not illustrated).

As shown in FIGS. 7A, 7B and F1GS. 8A, 8B, the modulator part 20 is provided with holes for fitting an intake valve 27, an inlet valve 28, an outlet valve 29, a regulator R and a pressure detection sensor 2a on the front face thereof, provided with an outlet port 21 and fluid channel-forming holes for forming respective vertical fluid channels described below on the upper face thereof, provided with a hole for fitting the pump 24 and fluid channel-forming holes for forming respective transverse fluid channels on both right and left faces thereof, provided with an inlet port 23 and a hole 30A for forming an electrical motor 30 on the back face thereof, and provided with a hole for forming a reservoir 22 on the bottom face thereof. To be more specific, the modulator part 20 is provided with fitting holes and others by effectively utilizing all the faces. Further, since the reservoir 22 is disposed at the lower part, it is designed so that the reservoir 22 has an enough space for allowing a stroke of a piston and the reservoir can be easily determined for capacity. Further, components such as electromagnetic valves are fixed on the front face in a concentrated way, thereby making it possible to assemble them on the front face, which is efficient in conducting the assembly work. In addition, the pump 24 which requires a housing space more than the components such as electromagnetic valves may be disposed by using a vacant space on the side face, making it possible to use the space effectively and therefore provide a downsized modulator part 20. Since the outlet port 21 is formed on the upper face and the inlet port 23 is disposed on the back face, the piping used as the output fluid pressure channel D2 from the simulator part 10 (refer to FIG. 1) and that used as the wheel fluid pressure channel E to the wheel brake B are connected to the respective faces. It is, therefore, possible to avoid interference of the above-described piping with the front face on which electromagnetic valves and others are fixed and to maintain electromagnetic valves and others easily.

In addition, a control housing (not illustrated) described below and other components can also be detached or attached easily.

A control housing (not illustrated) which houses electronic control units (controllers) and others for controlling opening and closing of respective electromagnetic valves is provided via seal members and others on the front face of the modulator part 20. As with the previously described simulator part 10, an opening 40a of an air hole 40 covered with a moisture permeable and water-proof material is perforated inside the control housing.

The inlet port 23 to which the piping of the output fluid pressure channel D2 (refer to FIG. 1) from the simulator part 10 is connected is formed in a closed-bottom cylindrical shape, communicated with a closed-bottom cylindrical fitting hole of the intake valve 27 via the depth fluid channel Y21 and the vertical fluid channel Y22 starting from the side face, communicated with a fitting hole of the pump intake valve 24a from a fitting hole of the intake valve 27 and communicated with a closed-bottom cylindrical fitting hole of the pump 24, Further, a fitting hole of the pump 24 is communicated with a closed-bottom cylindrical fitting hole of the inlet valve 28 through a damper 25 (not illustrated), an orifice 25a, the transverse fluid channel Y24 from the vertical fluid channel Y23 communicated with the back face, and communicated with the outlet port 21 located above through the vertical fluid channel Y25 starting from the upper face of the fitting hole of the inlet valve 28.

A fitting hole of the intake valve 27 is communicated with a closed-bottom cylindrical fitting hole of the regulator R through the vertical fluid channel Y26 and the transverse fluid channel Y27 starting from the bottom face, and also communicated with the vertical fluid channel Y23 on the discharge side of the pump 24 through the transverse fluid channel Y28 and the vertical fluid channel Y29 from the fitting hole of the regulator R.

Further, for a closed bottom cylindrical channel-forming hole of the reservoir 22, the vertical fluid channel Y30 starting from the upper face thereof is communicated with a fitting hole of the pump intake valve 24a through the check valve 22d (refer to FIG. 7A, 7B and FIG. 8B) and also communicated with a fitting hole at the intake side of the pump 24. The vertical fluid channel Y31 also starting from the upper face is communicated with a closed-bottom cylindrical fitting hole of the outlet valve 29. Further, a fitting hole of the outlet valve 29 is communicated with a flitting hole of the inlet valve 28 through the vertical fluid channel Y32 starting from the upper face thereof.

Further, the vertical fluid channel Y23 is formed by the intersection of the transverse fluid channel Y24 and provided with a breeder 41 at the edge thereof. Magnet coils (not illustrated) for driving magnet valves are wound around respective electromagnetic valves. An insertion hole 30B for inserting a connector of the pump 24 (not illustrated) and others is formed above an insertion hole 30A of the pump 24. Further, openings of the vertical fluid channel Y22 and the transverse fluid channels Y24, Y27 and Y28 are sealed with a stopper (not illustrated).

Then, a description is given for an actual flow of the brake fluid at the time of applying an normally brake and at the time of applying an antilock brake with reference to FIG. 9 through FIG. 11. As shown in FIG. 2, the following description is given for a case where the separation valve 11 is opened to block the output fluid pressure channel D1 and the output fluid pressure channel D2, whereas the on-off valve 13 is opened to communicate with the master cylinder C with the simulator 12.

First, a description is given for the flow of the brake fluid at the simulator part 10 (refer to FIG. 2) with reference to FIG. 9. At the simulator part 10, both when an normally brake is applied and when an antilock brake is applied, the inlet port 14 is communicated with a fitting hole of the on-off valve 13 via the vertical fluid channels Y1 and Y2, the transverse fluid channel Y3, the depth fluid channel Y4, a fitting hole of the pressure detection sensor 1a and the transverse fluid channel Y5. Since the on-off valve 13 fitted into the fitting hole is kept open, it is also communicated with a fitting hole of the simulator 12 via the transverse fluid channel Y10 from the depth fluid channel Y6. Therefore, when a driver operates a brake operator L (refer to FIG. 2), the brake fluid pressure produced at the master cylinder C is transmitted via the inlet port 14 to a fitting hole of the simulator 12, consequently imparting to the brake operator L an operating reaction force according to the operating force of the brake operator L.

In this instance, since the inlet port 14 is communicated with a fitting hole of the pressure detection sensor 1a via the vertical fluid channel Y1 and Y2, the transverse fluid channel Y3 and the depth fluid channel Y4, therefore, the brake fluid pressure on fluid channels at the master cylinder C rather than on the separation valve 11 is detected by the pressure detection sensor 1a.

Therefore, brake fluid is supplied to an outlet port 16 through the vertical fluid channels Y11 and Y12 from the free piston 15 and also supplied to the inlet port 23 of the modulator part 20 through the output fluid pressure channel D2 from the outlet port 16.

Then, a description is given for an actual flow of the brake fluid at the modulator part 20. As described with reference to FIG. 2, at the modulator part 20, when an normally brake is applied, an electrical motor 30 is driven by operation of the brake operator L to actuate the pump 24, by which the brake fluid discharged from the pump 24 is transmitted to the wheel brake B (refer to FIG. 2, the same shall apply hereinafter) in accordance with a magnitude of the brake fluid pressure detected by the pressure detection sensor 1a and the pressure detection sensor 2a. In other words, since the inlet port 23 is communicated with a fitting hole of the intake valve 27 through the depth fluid channel Y21 and the vertical fluid channel Y22, the brake fluid supplied to the inlet port 23 is absorbed into the pump 24 via the intake valve 27. Since a filing hole of the pump 24 is communicated with a filling hole of the inlet valve 28 through the vertical fluid channel Y23 and the transverse fluid channel Y24 and also a filling hole of the inlet valve 28 is communicated with the outlet port 21 through the vertical fluid channel Y25, the brake fluid flown out from the pump 24 is transmitted to the wheel brake B from the outlet port 21. In this instance, the brake fluid pressure is measured by a pressure detection sensor 2a communicated with the transverse fluid channel Y24 and the thus measured values (not illustrated) are taken into a controller, by which the brake fluid pressure applied to the wheel brake B is controlled so as to give a predetermined fluid pressure.

Further, when an antilock brake is applied, the brake fluid pressure transmitted to the wheel brake B is reduced by the controller (not illustrated). To be more specific, as shown in FIG. 10, brake fluid in an fluid channel leading to the wheel brake B is flown to a reservoir 22 via the vertical fluid channel Y25, a fitting hole of the inlet valve 28, a fitting hole of the vertical fluid channel Y32, a fitting hole of the outlet valve 29 and the vertical fluid channel Y31 from the outlet port 21, and temporarily reserved at the reservoir 22, thereby reducing the brake fluid pressure transmitted to the wheel brake B.

Further, when an engine (not illustrated) is not driven; all electromagnetic valves including the separation valve 11 are demagnetized. Thus, as shown in FIG. 11, the brake fluid pressure from the master cylinder C is transmitted to the outlet port 16 via the vertical fluid channel Y1, the separation valve 11 and the vertical fluid channel Y12 from the inlet port 14, and then to the inlet port 23 at the modulator part 20. Since all the electromagnetic valves are demagnetized at the modulator part 20 as well, the inlet port 23 is communicated with a fitting hole of the inlet valve 28 via the depth fluid channel Y21, the vertical fluid channels Y22 and Y26, the transverse fluid channel Y27, a fitting hole of the regulator R, the vertical fluid channels Y29 and Y23 and the transverse fluid channel Y24, and also communicated with the outlet port 21 through the vertical fluid channel Y25 from the fitting hole of the inlet valve 28. Accordingly, the brake fluid pressure produced due to an operating force of the brake operator L is applied as it is to the wheel brake B, thereby making it possible to brake the wheel brake B by the operating force of the operator L.

The vehicular brake fluid pressure controller 1 described above is provided with a hermetic free piston 15 structured so that brake fluid flows in when the pump 24 is halted and the brake fluid flows out when the pump 24 is actuated, and the brake fluid can be reserved in a hermetic environment where the brake fluid is not exposed to an ambient air. It is, therefore; less likely to have a case where the brake fluid changes in viscosity due to the influence of an ambient temperature that may be often found in conventional reservoirs, thereby the brake fluid pressure can be controlled more stably.

Further, since the controller can stably control the brake fluid pressure, the brake fluid flows out smoothly to the output fluid pressure channel D2 leading to the wheel brake B at the time of pressure control, consequently providing an effect of improving the performance at the time of pressure control.

In addition, since the simulator part 10 including a separation valve 11, a simulator 12, a pressure detection sensor 1a and a free piston 15 is structured separately from the modulator part 20 including a cut valve 26 (regulator R), a pump 24, an intake valve 27 and a reservoir 22, the vehicular brake fluid pressure controller 1 is simpler in structure than a case where these are made in an integrated form, thereby making it possible to improve the productivity and assembly efficiency and also reduce the cost. Further, since the vehicular brake fluid pressure controller 1 canbe divided into two parts, namely, the simulator part 10 and the modulator part 20, it can be structured so that either of these parts may be used together with another product, for example, which then leads to improvement in productivity and reduction in cost due to common use of components. In addition, it may be structured in such a way that another existing product may be used for fabricating either of these parts in whole or in part.

Since a brake fluid reserving chamber is constituted by the free piston 15, it is possible to reserve brake fluid more favorably in a hermetic environment where the brake fluid is not exposed to an ambient air, thereby making it possible to provide the vehicular brake fluid pressure controller 1 which is less likely to change in viscosity of the brake fluid due to the influence of an ambient temperature. Moreover, the controller is free from possible inclusion of air and others, allowing the brake fluid to flow in and out smoothly.

A description above is given for the embodiment of the present invention. The present invention shall not be restricted to the above-described embodiments, and many variations may be made without departing from the scope of the invention.

In the above-described embodiment, a brake fluid reserving chamber is constituted by the free piston 15. However, the present invention shall not be restricted thereto, and may be constituted in such a way that the brake fluid tank T also acts as a brake fluid reserving chamber. Such constitution removes the necessity for providing a brake fluid pressure channel with a separate brake fluid reserving chamber, thereby making it possible to reduce the cost and simplify the brake fluidpressure channel. Therefore, a vehicular brake fluid pressure controller can be obtained, which contributes to space saving.
[FIG. 1]
   10: simulator part
   D: output fluid pressure channel
   15: free piston
   1: vehicular brake fluid pressure controller
   12: simulator
   11: separation valve
   B: wheel brake
   20: modulator part
   H: open channel
   G: discharge fluid pressure channel
   E: wheel fluid pressure channel
   29: outlet valve
   28: inlet valve
   V: control valve unit
   26: cut valve
   27: intake valve
   25: damper
   24: pump
   R: regulator
   F: absorption fluid pressure channel
   22: reservoir

## Claims

1. A vehicular brake fluid pressure controller, in which a separation valve (11) communicates or blocks an output fluid pressure channel (D) leading brake fluid from a master cylinder (C) to a wheel brake (B) side and a brake operation of the wheel brake (B) by the brake fluid pressure is allowed on the wheel brake side in either state being communicated or blocked by the separation valve (11), the vehicular brake fluid pressure controller comprising:
a simulator (12) connected between the master cylinder (C) of the output fluid pressure channel (D) and the separation valve (11) and comprising a dummy cylinder (12a) for imparting operating reaction force to a brake operator (L) according to an operation of the brake operator (L);
a detection unit (1a) for detecting the brake fluid pressure applied to the simulator (10);
a cut valve (26) disposed between the output fluid pressure channel (D) and a wheel fluid pressure channel (E) for leading the brake fluid to the wheel brake (B) and for switching between two states where the brake fluid is either allowed or blocked to flow from the output fluid pressure channel (D2) to the wheel fluid pressure channel (E);
a pump (24) disposed between an intake fluid pressure channel (F) for leading the brake fluid to the output fluid pressure channel (D) and a discharge fluid pressure channel for leading the brake fluid to the wheel fluid pressure channel (E), the pump (24) actuating in accordance with magnitude of the fluid pressure detected by the detection unit (1a); and
an intake valve (27) for switching between two states where the intake fluid pressure channel (F) is either opened or closed;
**characterised in that** the vehicular brake fluid pressure controller further comprises:
a reservoir (22) disposed between the pump (24) and the intake valve (27) for temporarily reserving the brake fluid; and
a brake fluid reserving chamber (15) which is provided between the separation valve (11) and the intake valve (27), and sealed hermetically,
wherein the hermetic brake fluid reserving chamber (15) allows the brake fluid to flow therein when the pump (24) is halted, and allows the brake fluid to flow out therefrom when the pump (24) is actuated.

2. The vehicular brake fluid pressure controller according to claim 1, further comprising:
a simulator part (10) comprising the separation valve (11), the simulator (12), the detection unit (1a) and the brake fluid reserving chamber (15); and
a modulator part (20) comprising the cut valve (26), the pump (24), the intake valve (27) and the reservoir (22),
wherein the simulator part (10) is separated from the modulator part (20).

3. The vehicular brake fluid pressure controller according to claim 1 or claim 2, wherein the brake fluid reserving chamber (15) comprising a free piston (15) of which capacity increases due to inflow of the brake fluid when the pump (24) is halted and decreases due to outflow of the brake fluid when the pump (24) is actuated.

## Patentansprüche

1. Fahrzeug-Bremsflüssigkeitsdruck-Steuereinrichtung, bei der ein Trennventil (11) mit einem Ausgabeflüssigkeitsdruckkanal (D), der Bremsflüssigkeit von einem Hauptzylinder (C) zu einer Radbremsenseite führt, kommuniziert oder diesen blockiert und eine Bremsbetätigung der Radbremse (B) durch den Bremsflüssigkeitsdruck an der Radbremsenseite, sowohl in einem durch das Trennventil (11) kommunizierten Zustand als auch in einem durch das Trennventil (11) blockierten Zustand, ermöglicht ist, wobei die Fahrzeug-Bremsflüssigkeitsdruck-Steuereinrichtung umfasst:
einen Simulator (12), der zwischen dem Hauptzylinder (C) des Ausgabeflüssigkeitsdruckkanals (D) und dem Trennventil (11) angeschlossen ist und einen Steuerzylinder (12a) zum Vermitteln einer Betätigungsreaktionskraft auf einen Bremsbetätiger (L) gemäß einer Betätigung des Bremsbetätigers (L) umfasst;
eine Erfassungseinheit (1a) zum Erfassen des auf den Simulator (10) ausgeübten Bremsflüssigkeitsdrucks;
ein Schnittventil (26), das zwischen dem Ausgabeflüssigkeitsdruckkanal (D) und einem Radflüssigkeitsdruckkanal (E) zum Führen der Bremsflüssigkeit zu der Radbremse (B) und zum Umschalten zwischen zwei Zuständen, wobei es entweder der Bremsflüssigkeit ermöglicht ist, von dem Ausgabeflüssigkeitsdruckkanal (D2) zu dem Radflüssigkeitsdruckkanal (E) zu fließen, oder diese blockiert ist, angeordnet ist;
eine Pumpe (24), die zwischen einem Einlassflüssigkeitsdruckkanal (F) zum Führen der Bremsflüssigkeit zu dem Ausgabeflüssigkeitsdruckkanal (D) und einem Ablassflüssigkeitsdruckkanal zum Führen der Bremsflüssigkeit zu dem Radflüssigkeitsdruckkanal (E) angeordnet ist, wobei die Pumpe (24) gemäß der Größe des durch die Erfassungseinheit (1a) erfassten Flüssigkeitsdrucks betätigt wird; und
ein Einlassventil (27) zum Umschalten zwischen zwei Zuständen, wobei der Einlassflüssigkeitsdruckkanal (F) entweder offen oder geschlossen ist;
**dadurch gekennzeichnet, dass** die Fahrzeug-Bremsflüssigkeitsdruck-Steuereinrichtung ferner umfasst:
ein Reservoir (22), das zwischen der Pumpe (24) und dem Einlassventil (27) zum vorübergehenden Zurückhalten der Bremsflüssigkeit angeordnet ist; und
eine Bremsflüssigkeitsrückhaltekammer (15), die zwischen dem Trennventil (11) und dem Einlassventil (27) vorgesehen und hermetisch verschlossen ist,
wobei die hermetische Bremsflüssigkeitsrückhaltekammer (15) es der Bremsflüssigkeit ermöglicht, in diese hinein zu fließen, wenn die Pumpe (24) angehalten ist, und aus dieser heraus zu fließen, wenn die Pumpe (24) betätigt wird.

2. Fahrzeug-Bremsflüssigkeitsdruck-Steuereinrichtung nach Anspruch 1, ferner umfassend:
einen Simulatorteil (10), der das Trennventil (11), den Simulator (12), die Erfassungseinheit (1a) und die Bremsflüssigkeitsrückhaltekammer (15) umfasst; und
einen Modulatorteil (20), der das Schnittventil (26), die Pumpe (24), das Einlassventil (27) und das Reservoir (22) umfasst,
wobei der Simulatorteil (10) von dem Modulatorteil (20) getrennt ist.

3. Fahrzeug-Bremsflüssigkeitsdruck-Steuereinrichtung nach Anspruch 1 oder 2, bei der die Bremsflüssigkeitsrückhaltekammer (15) einen Freikolben (15) umfasst, dessen Kapazität sich infolge des Einströmens der Bremsflüssigkeit, wenn die Pumpe (24) angehalten ist, vergrößert und sich infolge des Ausströmens der Bremsflüssigkeit, wenn die Pumpe (24) betätigt wird, verkleinert.

## Revendications

1. Dispositif de commande de la pression d'un fluide de freinage de véhicule, dans lequel une vanne de séparation (11) ouvre ou ferme un canal de sortie (D) pour pression de fluide, conduisant le fluide de freinage d'un maître-cylindre (C) à un frein (B) de roue, et un actionnement en freinage du frein de roue (B) par la pression du fluide de freinage est permis sur le frein de roue dans l'un ou l'autre état, ouvert ou fermé par la vanne de séparation (11), le dispositif de commande de la pression d'un fluide de freinage de véhicule comprenant :
un simulateur (12) relié entre le maître-cylindre (C) du canal (D) de sortie pour pression de fluide et la vanne de séparation (11), et comprenant un faux cylindre (12a) destiné à imprimer une force de réaction d'actionnement à un actionneur (L) de frein, en fonction d'un actionnement de l'actionneur (L) de frein,
un bloc de détection (1a) pour détecter la pression du fluide de freinage appliquée au simulateur (10),
une vanne de coupure (26) disposée entre le canal (D) de sortie pour pression de fluide et un canal (E) pour pression de fluide à la roue, pour conduire le fluide de freinage au frein de roue (B) et commuter entre deux états dans lesquels le fluide de freinage est soit autorisé, soit empêché de s'écouler du canal (D2) de sortie pour pression de fluide vers le canal (E) pour pression de fluide à la roue,
une pompe (24) disposée entre un canal (F) d'admission pour pression de fluide, pour conduire le fluide de freinage au canal (D) de sortie pour pression de fluide, et un canal de décharge pour pression de fluide pour conduire le fluide de freinage au canal (E) pour pression de fluide à la roue, la pompe (24) fonctionnant en fonction de la grandeur de la pression de fluide détectée par le bloc de détection (1a), et
une vanne d'admission (27) pour effectuer une commutation entre deux états dans lesquels le canal (F) d'admission pour pression de fluide est soit ouvert, soit fermé,
**caractérisé en ce que** le dispositif de commande de la pression d'un fluide de freinage de véhicule comprend en outre:
un réservoir (22) disposé entre la pompe (24) et la vanne d'admission (27) pour accumuler temporairement le fluide de freinage, et
une chambre (15) d'accumulation de fluide de freinage, qui est prévue entre la vanne de séparation (11) et la vanne d'admission (27), et est hermétiquement scellée,
la chambre (15) hermétique, d'accumulation de fluide de freinage, laissant le fluide de freinage y pénétrer lorsque la pompe (24) est arrêtée, et laissant le fluide de freinage s'en échapper lorsque la pompe (24) est actionnée.

2. Dispositif de commande de la pression d'un fluide de freinage de véhicule selon la revendication 1, comprenant :
une partie simulateur (10) comprenant la vanne de séparation (11), le simulateur (12), le bloc de détection (1a) et la chambre (15) d'accumulation de fluide de freinage, et
une partie modulateur (20) comprenant la vanne de coupure (26), la pompe (24), la vanne d'admission (27) et le réservoir (22),
la partie simulateur (10) étant séparée de la partie modulateur (20).

3. Dispositif de commande de la pression d'un fluide de freinage de véhicule selon la revendication 1 ou la revendication 2, dans lequel la chambre (15) d'accumulation de fluide de freinage, constitue un piston (15) libre, dont la capacité augmente du fait de l'entrée du fluide de freinage lorsque le pompe (24) est arrêtée, et diminue du fait d'une sortie de fluide de freinage lorsque la pompe (24) est actionnée.
